# EUROPEAN PATENT SPECIFICATION

(11) **EP 0 276 862 B1**
(45) Date of publication and mention of the grant of the patent: **21.09.1994**
(21) Application number: 88101260.3
(22) Date of filing: 28.01.1988
(51) Int. Cl.: C08J 9/28, B28B 1/26, C08L 63/00

(54) **Mold for cast-molding slip and method for producing the mold**
Form zum Schlickergiessen und Verfahren zu deren Herstellung
Moule pour le coulage de barbotine et méthode de fabrication de ce moule

(30) Priority: 29.01.1987 JP 19738/87
(43) Date of publication of application: 03.08.1988
(73) Proprietor: INAX CORPORATION, Tokoname-Shi Aichi (JP)
(72) Inventor: Shimahara, Hironobu, Chitagun Aichi (JP); Murata, Kazushige, Tokoname-shi Aichi (JP); Takahashi, Hiroaki, Tokoname-shi Aichi (JP)
(74) Representative: Müller-Boré & Partner Patentanwälte

(56) References cited:
- EP-A- 0 194 757
- GB-A- 673 239

## Description

This invention relates to a mold for cast-molding a slip according to the preamble of claim 1, and a method for producing the mold according to the preamble of claim 7. Such a mold and method for its production is known e.g. from the EP-A-194 757. Such molds are useful for producing cast-molded articles from a ceramic slip, for obtaining sanitary ware, pottery ware, other ceramic products, etc.

Conventional methods for casting slips comprise, for example, filling the mold cavity of a divisible gypsum mold with a slip, and depositing the slip onto the surface of the gypsum mold by the action of gypsum in absorbing water from the slip. In a mechanical cast-molding process, such operations are efficiently carried out by pressurizing the slip to promote the dehydration and deposition of the slip.

In view of durability of a casting mold, it has been known to use the casting mold composed of a porous synthetic resin. It has been needed, however, to install water-drainage conduits in such a synthetic resin mold from viewpoint of safe demolding and relatively uniform deposition, because open cell porosity of a resin mold was usually not uniform.
In general, the defects of such synthetic resin molds have been deterioration in precise dimensions and shapes of the mold because of large curing shrinkage during production of such synthetic resin molds.

JP-A-60-89303 shows a mold for cast-molding slip, which is produced by mixing a resin material and inorganic compound powder and then molding and sintering the mixture to make the surface layer of a mold dense and the lower layer thereof coarse. It should be noted, however, that the resin-inorganic compound mixture is molded and then sintered to produce the slip-casting molds, large sintering shrinkage and non-uniform distribution of the powder must take place, and the resulting molds would suffer from serious deformation in both dimensions and shapes thereof.

In this connection, a porous epoxy resin molded product and a mold composed thereof are known, which are produced from an epoxy compound, a hardener compound, fillers, mixtures of suitable non-ionic emulsifiers, as known from the cited EP-A-194757. This document, however, fails to note serious problems such as formation of an emulsifier-based viscous substance hardly soluble in cool water, remaining in the preliminarily cured epoxy resin, and elution of the viscous substance with a solvent. Further, this document discloses water drainage conduits in the filter layers of the mold. Thus, it is difficult to uniformly elute the emulsifier-based substances even if one should have tried the elution.

The present inventors have noted that formation of the uniform fine open-cell structure of cured resins is hindered in the course of curing a synthetic resin emulsion material containing a non-ionic emulsifier, because an emulsifier-based viscous substance hardly soluble in cool water remains in the cured resin and is then solidified. Incidentally, the viscous substances seem to be a dense mixture of the emulsifier and water, a reaction mixture of the emulsifier and a polymerizable material, and/or a mixture of the emulsifier and a low-polymer resin.

In this connection, "Encyc. Poly. Sci. & Tech. 1965, Vol. 3, Pages 97-98" shows cellular polymers of cellulose (acetate) sponge, polyethylene and polyvinylchloride are produced by leaching to remove sodium sulfate, starch, talc or zinc stearate contained therein. Incidentally, the epoxy resin marked as by leaching appearing in Table 3 thereof is clearly a printing error for cellulose acetate by leaching. Thus, it is not obvious over the literature that emulsifier-based substances hardly soluble in cool water can be successfully eluted with a water-based solvent in the present invention.

The present inventors have solved the above mentioned problems by substantially eluting the emulsifier-based viscous substance with a large amount of a solvent such as warm water containing an alcohol. Moreover, the present inventors have also found that installation of water-drainage conduits in the casting mold produced from an emulsifier-containing resin material should be avoided, because a solvent for eluting the emulsifier-based viscous substance is apt to flow towards the conduits and thus the non-uniform elution of the viscous substance results in non-uniform open-cell structures of the synthetic resin mold.

It is an object of the present invention to provide a mold for casting a slip having uniformly fine open-cell structures, precise dimensions, good durability, uniform deposition properties, and good demolding properties.

It is another object of the present invention to provide a method for effectively producing the casting mold.

The present inventors have found that a filter layer having substantially uniform fine open-cell pores is obtained by molding a synthetic resin emulsion material into a resin layer having no water-drainage conduits therein and having no sudden change in thickness (preferablly having no substantial change in thickness), and uniformly eluting or dissolving out an emulsifier-based viscous substance. Thus, a mold for casting a slip having precise dimensions, good durability, uniform deposition properties, and good demolding properties is obtained by applying a coarse fluid-flowing layer adjacent to the resin filter layer.

In accordance with the present invention there is provided a mold according to claim 1.

There is also provided a method for producing a divisible mold according to claim 7.

FIG.1 is a schematic sectional view showing a slip-casting mold according to the present invention.

FIG.2 is a schematic view showing a section of a slip-casting mold and an apparatus for cast-molding a slip, according to the present invention.

FIG.3 is a schematic sectional view showing another slip-casting mold according to the present invention.

The above mentioned filter layer penetrates into the coarsely porous surface of the coarse intermediate layer, and is permeably resin-bonded via a substantially porous interface to the intermediate layer. The present filter layer, produced by molding a synthetic resin emulsion material and eluting an emulsifier-based viscous substance with a solvent, has uniform open-cell fine pores, satisfactory mechanical strength, dimensional stability, and strong resinous adhesion. Thus, the present casting mold does not need a complicated anchoring means for the both layers which causes non-uniform permeability or hinders permeation between the filter layer and the coarse intermediate layer, such as anchoring via a wedge-like convex-concave interface, anchoring by embedding metal pieces, or non-permeable bonding with an adhesive. Also, it is perferred that the filter layer of the present casting mold has no sudden change in its thickness, with moderate change in thickness as necessary, so that the emulsifier-based viscous substance can be uniformly eluted to form uniform open-cell pore structures.

The above mentioned housings for the mold include, for example, a divisible air-tight vessel, a housing means comprising a plate-like or vessel-like portion and a sealed portion coated with a paint or resin material, etc.

The above mentioned solvent for eluting the emulsifier-based viscous substance can be a solvent which dissolves the viscous substance and does not affect the cured resin and mold members. Normally, there can be used a water-based solvent, e.g. warm water at about 35 to about 80°C and preferably warm water containing additives dissolved therein such as a lower alcohol (e.g. having 1 to 4 carbon atoms). The elution of the viscous substance can be carried out by flowing a considerably large amount of the solvent through the preliminarily cured filter layer, for example, for about 1 hour to several tens of hours.

The above mentioned non-ionic emulsifier can be used alone. It is generally desirable, however, to use two or more types of non-ionic emulsifiers having different HLB (i.e. hydrophilic-lipophiiic balance) values. More specifically, in the combination of two emulsifiers, it is desirable that the quantity of one emulsifer is not less than about 5% by weight and preferably not less than about 10%, the quantity of the other emulsifier being not more than about 95%. When three or more types of emulsifiers are used, the quantities of two emulsifiers are as mentioned above. The quantity of the other emulsifier(s) of the three or more emulsifiers is not especially restricted, but is desirably not less than about 5% by weight. Moreover, the sum of the HLB values of the emulsifiers, when they are mixed, is desirably in the range of about 7 to 16.5, preferably about 8 to 16, and typically about 12 to 15. When one non-ionic emulsifier is used alone, it is also desirable that the HLB value of the emulsifier is in the above mentioned range.

The present invention is further described with reference to Drawings.

### (1) Mold for casting slip

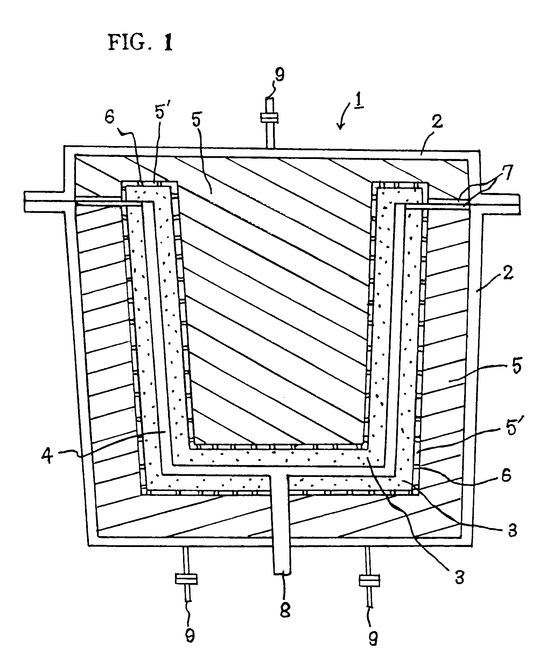

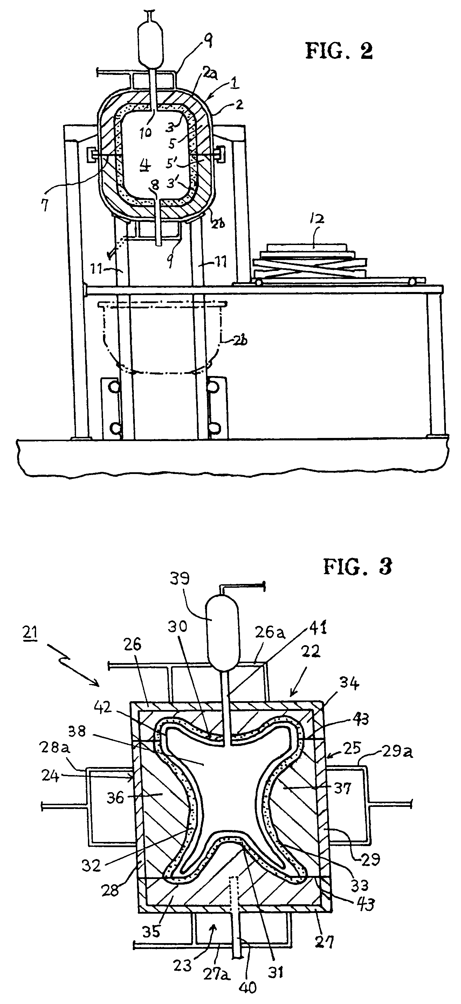

As shown in FIG.1, the casting mold 1 of the present invention is a divisible casting mold consisting essentially of an air-tight housing 2, a coarse intermediate layer (5 and/or 5') and a filter layer 3 adjacent to the intermediate layer. Thus, a mold cavity 4 is formed inside the filter layers 3. A slip supply duct 8 is connected with the mold cavity 4, and a fluid-flowing duct 9 is connected with the intermediate layer (5 or 5'). Onto the divisible boundary portions of the intermediate layers applied are sealing means 7 (43 in FIG.3) such as (a) plastic or metal plates, (b) adhesive tapes or (c) coating of sealing materials, whereby each mold portion can be subjected to suction or pressurization independently.

The coarse intermediate layer, which gas and liquid can pass through, desirably comprises (a) both an interstructure wall 5ʹ having many pores 6 (e.g. a few mm in diameter) and a coarsely porous solid member (or layer) 5 adjacent to the wall 5ʹ as shown in FIG.1, or (b) a coarsely porous solid member (or layer) 5 adjacent to the filter layer 3 wherein the interstructure wall 5ʹ mentioned above is omitted. It is also possible, however, to omit the coarsely porous solid member 5 in the above mentioned embodiment (a). In this case, it is necessary to install a fluid-flowing duct 9 at a water-drainable position (e.g. at a gravitationally low position), because the space where the porous solid member 5 as shown in FIG.1 is omitted is hollow.

The casting mold shown in FIG.1 is generally for molding a solid (i.e. not hollow) slip-cast article. A hollow cast article, however, can be readily obtained by using such a casting mold having a thick space of the mold cavity 4. Incidentally, the hollow molded articles can be produced by filling the mold cavity with a slip, depositing the slip onto the filter layer to the thickness of about 10 mm, and then draining the remaining slip away, which can be further described with reference to FIGS.2 and 3.

### (2) Molding materials for the filter layer

The synthetic resin material for producing the present filter layer can be a flowable synthetic resin material which can be cured into a hardened synthetic resin of porous open-cell structure. The flowability can be obtained by emulsifying the resin material.

The useful resin materials include, for example, an epoxy resin, a phenolic resin, a rigid urethane resin, a polyester resin, a furan resin, an acrylic resin, etc.

Typically, the present invention is further explained in the following with respect to the use of an epoxy resin emulsion material.

### (3) Epoxy resin for filter layers (illustration)

The filler-containing epoxy resin filter layer preferably used in the present invention is effectively obtained by molding a molding material which contains an epoxy compound having one or more epoxy groups in each molecule, a hardener compound which is cured with the epoxy compound, an emulsifier comprising preferably two or more types of non-ionic emulsifiers selected from three or more types of non-ionic emulsifiers having HLB values of about 4∼8, about 8∼17 and about 11∼15.6, respectively, water or a water-surface active agent mixture, and filler particles; wherein said molding material comprises by weight about 100 parts of a mixture of an epoxy compound and a hardener compound therefor, about 30 parts or less, e.g. about 1 to about 30 parts (preferably about 5 to about 30 parts) of non-ionic emulsifiers, about 1 to about 200 parts (usually about 10 to about 80 parts) of water, and about 50 to about 600 parts of filler particles; and then eluting the emulsifier-based viscous material with a solvent. Incidentally, the quantity of the hardener compound is generally in the range of about 20 to about 50 parts by weight to 100 parts by weight of the epoxy compound.

### (3) (a) Epoxy compound (Illustration)

An epoxy compound having one or more epoxy groups in one molecule is used in the present invention. As the epoxy compound, a diglycidyl ether of bisphenol A type or of bisphenol F type is generally preferred. In the case where filter layers having high resistance to chemicals and heat are required, it is advisable to use a polyfunctional epoxy resin such as polyglycidyl ether derived from phenolic novolak or from cresol novolack or triglycidyl ether of trimethylol propane (TMP); glycidyl ester derived from acid anhydrides such as vinylcyclohexane dixode, tetrahydro-phthalic anhydride (THPA); and hexahydro-phthalic acid (HHPA); or an alicyclic epoxy resin such as hydantoin based-epoxy resin. As the epoxy compound to be used for a viscosity modifier, can be used mono- or di-glycidyl ether or ester, namely, fatty glycidyl ethers represented by butyl glycidyl ether (BGE), aromatic glycidyl ether such as cresyl glycidyl ether (CGE), phenyl glycidyl ether; glycidyl ethers derived from higher alcohols and glycols, and glycidyl esters derived from fatty acid.

Such epoxy compound may be used alone or in combination of two or more as necessary.

### (3)(b) Hardener compound (Illustration)

The hardener compounds for the epoxy resin include, for example, aliphatic polyamines such as diethylene triamine (DETA), triethylene tetraamine (TETA), m-xylylene diamine (m-XDA) and trimethyl hexamethylene diamine (TMD); alicyclic polyamines such as isophorone diamine (IPD), N-aminoethyl piperazine and imidazole compound; aromatic polyamines such as diaminodiphenyl methane (DDM), diamino-diphenyl sulfone (DADPS) and phenylenediamine; polyamides such as the condensates of basic acid and polyamine; and the like. Such compounds may be used alone or in combination, as required. In addition, as the hardener can be used polymers, condensates, or reaction products of at least one of the above mentioned compounds with at least one of formalin, acrylic acid, polyols, phenols, polyesters, oxides, mono-, dl- or polyglycidyl ethers. Among them, preferred hardeners are reaction products of the above mentioned amine or amide or a mixture thereof with glycidyl ether or polyphenol, or polycondensates thereof with a basic acid or formalin. Other suitable hardeners include reaction products of an aliphatic polyamine, a glycidyl ether and a polyphenol; reaction products of an aliphatic polyamine, an aromatic polyamine, a glycidyl ether and a polyphenol; and reaction products of a dicyandiamide, an aliphatic polyamine, a glycidyl ether, and a polyphenol.

### (3)(c) Preferable emulsifiers

In order to obtain a filter layer having uniform porosity and excellent dimensional stability and mechanical strength, it is preferred to use at least two types of three kinds of non-ionic emulsifiers having HLB values of 4-8, 8-17, and 11-15.6, respectively. Preferred emulsifiers having 4-8 HLB include sorbitan aliphatic acid esters, those having 8-17 HLB include polyoxyethylene oleyl ethers, and those having 11-15.6 HLB include polyoxyethylene sorbitan aliphatic acid ethers. It is desired that at least two types of these emulsifiers are used together, and it is preferable to use three types of the emulsifiers having HLB values of 4-8, 8-17, and 11-15.6, respectively. It is more preferable to use a mixture of a sorbitan aliphatic acid ester, a polyoxyethylene oleyl ether, and a polyoxyethylene sorbitan aliphatic acid ester.

Particularly in the case of epoxy resin systems, the emulsifier is preferably such that can be added to one or both of the epoxy compound and the hardener compound. It is desirable that the emulsifier is excellent in storage stability even when it coexists with the epoxy compound and/or hardener.

### (3) (d) Filler particles

The type, particle size and quantity of the filler are factors which greatly affect the characteristics of the filter layers besides the quantity of water to be added. The type of the fillers used in the invention is not particularly restricted as long as they are usually used for synthetic resins. For example, silica sand, calcium carbonate, talc, barium sulfate, clay, aluminum hydroxide, and pigments such as titanium oxides and chromium oxides can be used. Also, dolomite and ceramic powder may be used. Non-organic fillers such as alumina, glass beads, pearl sand, and Ottawa sand, and organic fillers such as spherical particles of phenolic resin and epoxy resin may also be used. It is preferable that the filler has a certain particle size range such as 60 - 100 mesh, 100 - 200 mesh, 200 - 300 mesh or smaller than 300 mesh, and has substantially spherical or similar shape. In the case where a filter layer having accurate pore diameter and porosity is to be made, such product can be obtained by using a filler having a certain particle size range and spherical or similar shape alone or in combination. The preferred amount of the filler to be added is about 30 to about 80% by weight of the total amount of a molding material.

### (3)(e) Molding of the material

The materials as described above are mixed together to give an emulsified resin material to be used for molding.

In order to break the bubbles formed upon stirring the molding material, a defoaming agent having defoaming or foam breaking action is added as necessary.

Filter layer can be made, for example, by casting the above mentioned molding material, gelling and then heating it to dehydrate and simultaneously cure the material, then eluting an emulsifier-based viscous substance with a solvent, and further curing the molded product.

Such a filter layer made from the above described materials can be produced by casting method, and has uniform fine open-cell structure, and excellent dimensional stability, mechanical properties, durability, etc. Moreover, it is possible to obtain a filter layer having accurate pore diameter and porosity by selecting the amount of water and the type of the filler. Also, by selecting a hardener, gelling time of the molding material can be reduced to shorten the processing time.

### (4) Filter layer

The filter layer 3 thus obtained is required to have a smooth surface and also to have fine open-cell structure that enables filtration and deposition of a slip. The diameter of the fine pores of the layer is suitably in the range of, for example, about 2 to about 60 microns. The thickness of the filter layer is at least about 0.5 mm or more, and preferably in the range of about 10 to about 50 mm or more. When the thickness is less than about 5 mm, such a filter layer can be readily formed by known methods such as trowelling, brushing, spraying, flow casting, doctor blade-coating, etc. instead of the cast molding.

### (5) Intermediate layer of coarsely porous solid materials

The material of the coarsely porous solid layer 5 for the intermediate layer having coarsely porous structure is not particularly restricted as long as it has such open-cell structure that enables easy draining, suction and air-pressurization. In view of feasibility of molding, however, the material is preferably an aggregate/resin solid material comprising a large amount of aggregate (e.g. about 80 to 90 parts by weight) and a small amount of a synthetic resin (e.g. about 20 to 10 parts by weight) sufficient to partly bond the aggregate. The aggregate is exemplified by mixtures (particle size approximately 500 to 5000 microns) of usual aggregate (e.g. silica sand, calcium carbonate, white marble, etc.) and lightweight aggregate (e.g. volcanic balloon, felite, pumice stone, alumina grit, etc.). As the adhesive synthetic resin material, any adhesive resin material can be used as long as it is water-insoluble when adhesion cured; such resin materials include epoxy resins, phenolic resins, urethane resins, acrylic resins, etc. Molding of the coarsely porous solid layer can be readily carried out by kneading the aggregate and resin material, and then, for example, forcing the resulting mixture into a mold having a predetermined shape to cure the resin material.

The diameter of the coarse pores of the coarsely porous solid layer 5 is suitably in the range of, for example, about 80 to about 1000 microns. The thickness of the solid layer is at least about 5 mm or more, and preferably about 30 to about 100 mm. The thickness of the layer may be changed part by part as necessary.

### (6) Production of a mold for cast molding

In the following, described is an example of producing a lower mold portion of a mold for cast molding having a shape as illustrated in Fig.1, wherein an interstructure wall 5ʹ is omitted.

### (6) (a) Production of coarsely porous solid layer

A model having a convex shape to be surrounded by the solid layer 5 of the lower mold portion as illustrated in Fig.1 is prepared. A releasing agent is applied onto the surface of the model. The model is placed upside-down (namely in a convex configuration), and then an air-tight housing, e.g. a vessel 2, is placed upside-down over the model. The upper part of the vessel is opened for filling. The mold space for the coarse solid layer 5 thus formed between them is force-filled with an aggregate/epoxy resin mixture material as described below. The mixture material is allowed to stand for curing the resin component. After curing, the model is removed to give a coarse solid layer 5. Incidentally, the aggregate/resin mixture material consists essentially by weight of, for example, 80 parts of pumice stone, 10 parts of calcium carbonate, and 10 parts of a commercially available epoxy compound/hardener compound resinous liquid.

### (6)(b) Production of a filter layer of fine open-cell structure

A convex-shaped model to be surrounded by a filter layer 3 of the lower mold portion as illustrated in Fig.1 is produced, and the surface of the model is treated with a releasing agent. The model is placed upside-down (namely in a convex configuration), and then the solid layer produced in (6) (a) above is placed upside-down over the model. An epoxy resin/filler molding material as described below is poured into the molding space for the filter layer 3 thus formed between them, and is allowed to stand to preliminarily cure the molding material. Then the model is removed, and an emulsifier-based viscous substance is eluted with a large amount of warm water containing an alcohol (e.g. isopropyl alcohol). Thus, there is obtained a lower mold portion for cast molding which substantially comprises an air-tight housing such as vessel 2, a coarsely porous solid intermediate layer 5 and a filter layer 3. Incidentally, a slip supply duct 8, a fluid flowing duct 9, sealing means 7 and the like can be readily installed in the above mentioned process. The upper mold portion of the mold as illustrated in Fig. 1 can be similarly produced.

Incidentally, the above resin-based molding material has, for example, the following composition.

| | |
|---|---|
| Epoxy compound | 100 parts by weight |
| [a mixture of 85% by weight of Epicoat (supplied by Yuka-Shell Epoxy K.K.,Japan) and 15% by weight of Eponit 028 (supplied by Nitto Kasei K.K.,Japan)] | |

| Emulsifier | |
|---|---|
| Sorbitan fatty acid ester | 8 parts by weight |
| Polyoxyethylene oleyl ether | 8 parts by weight |
| Polyoxyethylene sorbitan fatty acid ester | 8 parts by weight |

| | |
|---|---|
| Hardener compound | 30 parts by weight |
| [modified aliphatic polyamine obtained by reacting 50% by weight of aliphatic polyamine, 30% by weight of glycidyl ether and 20% by weight of polyphenol] | |

| | |
|---|---|
| Filler (ceramic powder) | 220 parts by weight |

| | |
|---|---|
| Water | 50 parts by weight |

### (7) Use of the casting mold (I)

The mold 1 in FIG.2 shows an embodiment of the present casting mold. As shown in FIG.2, the casting mold 1 comprises an upper mold portion 2a and a lower mold portion 2b, wherein filter layers 3, 3ʹ are installed inside a divisible air-tight vessel 2 ,and coarse intermediate layers 5, 5ʹ are installed outside the filter layers 3, 3ʹ, respective-ly. A mold cavity 4 is formed inside the filter layers. At least one end of each intermediate layer 5, 5ʹ leads to the outside of the vessel 2 and is communicated with atmospheric pressure or a depressurization source. The upper mold portion 2a is equipped with an overflow tank which is communicated with the mold cavity 4 through the filter layer. The lower mold portion 2b is equipped with a slip supply duct 8 which is communicated with the mold cavity 4 through the filter layer 3ʹ. The lower mold portion 2b is movably supported upward and downward by a supporting member 11. A wagon for receiving a cast-molded article is installed between the moving positions of the lower mold portion 2b.

The cast molding is carried out in the following way. A slip is supplied via the slip supply duct 8 into the mold cavity 4 until the slip flows into the overflow tank. The slip in the mold cavity 4 is pressurized by sending compressed air into the overflow tank and the coarse intermediate layers 5, 5ʹ are communicated with atmospheric pressure or a depressurization source, whereby the deposition velocity of the slip onto the filter layers 3, 3ʹ as well as the diffusion velocity of water contained in the deposited slip are enhanced. When the deposited slip on the filter layers 3, 3ʹ reaches a predetermined thickness, the pressure within the overflow tank is turned to atmospheric pressure and the remaining slip in the mold cavity 4 is drained via the slip supply duct, whereby a hollow molded article is produced.

Then, the intermediate layer 5ʹ is pressurized by sending compressed air to an air-water separator located under the lower mold portion 2b to exude some water remaining in the filter layer 3ʹ onto the interface between the filter layer 3ʹ and the molded article. Thus, water membrane is formed between them and the lower mold portion is readily demolded. The molded article is attracted in vacuum into the upper mold portion 2a and hung therefrom. A receiving wagon 12 is placed under the molded article. Water membrane is formed on the interface between the molded article and the filter layer 3 of the upper mold portion 2a as described above, and the molded article is demolded on the wagon 12.

### (8) Use of the casting mold (II)

The mold 21 in FIG.3 shows another embodiment of the present casting mold. As shown in FIG.3, the casting mold 21 comprises air tight vessels 26 through 29, filter layers 30 through 33 inside of the vessels, and coarse intermediate layers 34 through 37 between the filter layers and the vessels. At least one end each of the intermediate layers leads to the outsides of the vessels 26 through 29, and is communicated via fluid flowing ducts 26a through 29a with atmospheric pressure or a depressurization source, respectively. A mold cavity 38 is formed inside the filter layers 30 through 33. The upper mold portion 22 is equipped with an overflow tank 39 which is communicated with the mold cavity 38 through the filter layer 30. The lower mold portion 23 is equipped with a slip supply duct 40 which is communicated with the mold cavity 38 through the filter layer 31.

The cast molding is carried out in the following way. A slip is supplied via the slip supply duct 40 into the mold cavity 38 until the slip flows into the overflow tank 39. The slip in the mold cavity 38 is pressurized by sending compressed air into the overflow tank (or by pressurizing the slip supply duct), and the coarse intermediate layers 34 through 37 are communicated with atmospheric pressure or a depressurization source. Thus, the deposition velocity of the slip onto the filter layers 30 through 33 as well as the diffusion velocity of water contained in the deposited slip are enhanced. The overflow tank 39 is then communicated with atmospheric pressure and the remaining slip is drained via the slip supply duct to produce a hollow molded article 42.

Then, the intermediate layers 34, 35 of the upper and lower mold portions 22, 23 is pressurized to exude some water remaining in the filter layers 30, 31 onto the interface between the molded article 42 and the filter layers. Thus, water membrane is formed between them and attraction between the molded article 42 and the upper and lower mold portions 22, 23 are loosened, whereby the molded article is readily demolded. The whole side surfaces of the molded article 42 are supported and suspended by side mold portions 24, 25, preferably by communicating the side mold portions with a depressurization source, and the upper and lower mold portions 22, 23 are removed. In this state, the molded article does not suffer from shrinking deformation, cracking and partial fracture owing to its weight, because the whole side surfaces thereof are supported by the side mold portions 24, 25. A receiving stand is placed under the molded article 42. Water membrane is formed on the interface between the molded article 42 and the filter layers 32, 33 by pressurizing the coarse intermediate layers 36, 37 of the side mold portions 24, 25 to exude some water remaining in the filter layer 32, 33, whereby demolding can be readily conducted. The side mold portions 24, 25 are removed to demold the molded article 42 on the stand.

### (9) Performances of the casting mold

The casting mold of the present invention is quite satisfactory with respect to precise dimensions, uniform deposition properties and demolding properties. As to the durability of the mold, it has been expected to be durable for more than 20,000 cycles of cast molding.

### (10) Preferred filler particles

In addition to the filler particles described in the paragraph (3) (d) above, the present inventors have found that water-insoluble filler particles of a hydrophilic thermoplastic resin are especially preferred for the performances of the present filter layer. Because of thermoplastic properties, filler particles having substantially spherical shapes and smooth surfaces, which are very suitable in the present invention, are readily obtained. Also, the specific gravity of such resins are substantially the same as the emulsified resin materials.

Thus, the following characteristics are exhibited by the use of such hydrophilic resin fillers: (a) a larger amount of fillers can be incorporated in the emulsified resin material, and the resulting mixture is more flowable, (b) more uniform porosity and pore sizes are readily obtained, (c) larger degree of porosity and smaller pore sizes of the filter layer are readily obtained, (d) a hydophilic filter layer is obtained; whereby molding of the filter layer is readily carried out, and more uniform deposition properties and better demolding properties of the filter layer are realized. For example, water permeability of the filter layer containing such hydrophilic fillers is at least twice and generally more than 5 times the filter layer of the similar structures containing hydrophobic fillers. Such effects can be obtained when filler particles comprise about 30% by weight or more of the hydrophilic resin particles of substantially spherical shapes.

Incidentally, such hydrophilic thermoplastic resins include, for example, acrylic (e.g. methacryl or acryl) resins, polyamide resins, vinyl acetate copolymer resins, cellulose acetate resins, modified resins derived therefrom, etc. Methyl methacrylate resin is typically used.

### Actions and Effects of the Invention

As described in the paragraphs of "Prior Art", "Summary of the Invention" and others, the present invention has been accomplished by (a) substantially solving the problem of curing shrinkage upon producing a synthetic resin filter layer by the use of a resinous emulsion material, (b) substantially solving the problem of an emulsifier-based viscous substance remaining in the filter layer by the use of a filter layer having no water-drainage conduits and elution of the substance with a solvent, and (c) substantially solving other problems by using a resinous filter layer having no sudden change in the thickness thereof and by permeably resin-bonding the filter layer to a coarsely porous intermediate layer. By the combination of the above mentioned factors (a), (b) and (c), the present casting mold is provided with precise dimensions, good durability, uniform deposition properties, good demolding properties, etc.

## Claims

1. A mold for cast-molding a slip which comprises a divisible casting mold including a plurality of mold portions to form a mold cavity (4) when mated together, each mold portion including an air-tight housing (2), an intermediate layer (5) of coarsely porous structure adjacent to the air-tight housing, and a solid synthetic resin filter layer (3) of fine open-cell structure adjacent to the intermediate layer, a slip supply duct (8) being connected with said mold cavity (4) and communicated with the outside of the air-tight housing, a fluid-flowing duct (9) being connected with said coarse intermediate layer and communicated with the outside of the air-tight housing, said filter layer (3) being joined to the coarse intermediate layer (5);
characterized in that
the filter layer (3) is permeably resin-bonded to and firmly supported by the coarse intermediate layer (5), in that said filter layer (3) has precise shape and dimension as it is molded from an emulsifier-containing resinous emulsion material without substantial curing shrinkage, in that said filter layer (3) has a fine open-cell structure as it is substantially free of remaining emulsifier-based solid substances, and in that said mold including the filter layer (3) having the precise shape and dimension and fine open-cell structure is producible by casting and molding, on a coarse intermediate layer bonded to an air-tight housing, a flowable emulsion material comprising by weight about 100 parts of a curable synthetic resin material, about 1 to about 30 parts of a nonionic emulsifier, about 1 to about 200 parts of water, and about 50 to about 600 parts of filler particles, into a cured filter layer, and uniformly eluting the resin filter layer with a water-based solvent to substantially remove emulsifier based viscous substances finely dispersed in the cured resin layer, and further curing the resin layer; whereby said filter layer (3) is provided with the functions of uniformly draining water, depressurizing, and supplying water and air by the aid of the coarse intermediate layer (5) and the fluid-flowing duct (9) connected therewith.

2. The mold according to claim 1, in which the filter particles comprise hydrophilic resin particles of substantially spherical shapes.

3. The mold according to claim 1 or 2, in which the water-based solvent is selected from warm water and warm water containing an additive dissolved therein.

4. The mold according to anyone of claims 1 to 3, in which the synthetic resin material for the filter layer is selected from the group consisting of an epoxy resin, a phenolic resin, a furan resin, a rigid urethane resin, a polyester resin, and an acrylic resin.

5. The mold according to anyone of claims 1 to 4, in which the flowable emulsion material for molding the filter layer comprises by weight about 100 parts of a mixture of an epoxy compound and a hardener compound therefor, about 1 to about 30 parts of non-ionic emulsifiers, about 1 to about 200 parts of water, and about 50 to about 600 parts of filler particles; said emulsifiers being at least two types selected from the group consisting of non-ionic emulsifiers having HLB values of 4 to 8, 8 to 17 and 11 to 15.6, respectively.

6. The mold according to anyone of claims 1 to 5 , in which the filter layer penetrates into the coarse surface of the coarse intermediate layer and is permeably resin-bonded to the intermediate layer.

7. A method for producing a divisible mold (1) for cast molding a slip including a plurality of mold portions to form a mold cavity (4) when mated together, characterized by force-filling a molding space composed by a divided air-tight housing (2) and a model for a coarse intermediate layer, with a mixture consisting essentially of a large quantity of aggregate particles and an adhesive synthetic resin material in an amount sufficient to partly bond the aggregate particles, to form an intermediate layer (5) of coarsely porous structure bonded to the air-tight housing;
cast-filling a molding space composed by the resulting coarse intermediate layer (5) and a model for a filter layer having the shape of a desired slip-molding article, with a flowable emulsion material comprising by weight about 100 parts of a curable synthetic resin material, about 1 to about 30 parts of a non-ionic emulsifier, about 1 to about 200 parts of water, and about 50 to about 600 parts of filler particles, to form a cured synthetic resin filter layer (3) firmly bonded to the intermediate layer (5) and having precise shape and dimension due to no substantial curing shrinkage and bonding to the intermediate layer; and then uniformly eluting the resin filter layer with a water-based solvent to substantially remove an emulsifier-based viscous substance finely dispersed in the cured resin layer and further curing the resin layer, to form a filter layer (3) substantially free of the viscous substances and of substantially uniform fine open-cell structure permeably joined to the coarse intermediate layer (5).

8. The method according to claim 7, in which the filler particles comprise hydrophilic resin particles of substantially spherical shapes.

9. The method according to claim 7 or 8, in which the water-based solvent is selected from warm water and warm water containing an additive dissolved therein.

10. The method according to claim 7, 8 or 9, in which the synthetic resin material for the filter layer is selected from the group consisting of an epoxy resin, a phenolic resin, a furan resin, a rigid urethane resin, a polyester resin, and an acrylic resin.

## Patentansprüche

1. Form zum Schlickergießen mit einer teilbaren Gießform, die eine Mehrzahl von Formbereichen umfaßt, um, wenn sie zusammengepaßt sind, einen Formhohlraum (4) zu bilden, wobei jeder Formbereich ein luftdichtes Gehäuse (2), eine Zwischenschicht (5) grob poröser Struktur benachbart zum luftdichten Gehäuse und eine feste Kunstharzfilterschicht (3) feiner offenzelliger Struktur benachbart zur Zwischenschicht umfaßt, wobei eine Schlickerzufuhrleitung (8) mit dem Formhohlraum (4) verbunden ist und mit der Außenseite des luftdichten Gehäuses in Verbindung steht, wobei eine Fluidströmungsleitung (9) mit der groben Zwischenschicht verbunden ist und mit der Außenseite des luftdichten Gehäuses in Übertragungsverbindung steht, wobei die Filterschicht (3) mit der groben Zwischenschicht (5) verbunden ist;
dadurch gekennzeichnet, daß die Filterschicht (3) mit der groben Zwischenschicht (5) durchdringbar harzverbunden und durch diese dauerhaft getragen ist, daß die Filterschicht (3) eine präzise Form und Abmessung hat, da sie aus einem emulgatorhaltigen, harzartigen Emulsionsmaterial ohne nennenswerte Aushärtungsschrumpfung geformt ist, daß die Filterschicht (3) eine feine offenzellige Struktur hat, weil sie im wesentlichen frei von Feststoffrestsubstanzen auf Emulgatorbasis ist, und daß die Form einschließlich der Filterschicht (3) mit der präzisen Form und Abmessung und der feinen offenzelligen Struktur erzeugbar ist durch Gießen und Formen eines fließfähigen Emulsionsmaterials, das etwa 100 Gewichtsteile eines aushärtbaren Kunstharzmaterials, etwa 1 bis 30 Gewichtsteile eines nicht-ionischen Emulgators, etwa 1 bis 200 Gewichtsteile Wasser und etwa 50 bis 600 Gewichtsteile Füllstoffpartikel umfaßt, in eine ausgehärtete Filterschicht an einer mit dem luftdichten Gehäuse verbundenen groben Zwischenschicht, und gleichmäßiges Eluieren der Harzfilterschicht mit einem auf Wasser basierenden Lösungsmittel, um in der ausgehärteten Harzschicht auf Emulgator basierende, fein dispergierte viskose Substanzen im wesentlichen zu entfernen, und zusätzliches Aushärten der Harzschicht, wobei die Filterschicht (3) mit den Funktionen gleichmäßiges Entwässern, Drucklosmachen und Zuführen von Wasser und Luft mit Hilfe der groben Zwischenschicht (5) und der damit verbundenen Fluidströmungsleitung (9) ausgestattet ist.

2. Form nach Anspruch 1, bei der die Filterpartikel im wesentlichen kugelförmige hydrophile Harzpartikel umfassen.

3. Form nach Anspruch 1 oder 2, bei der das auf Wasser basierende Lösungsmittel aus warmem Wasser und warmem Wasser ausgewählt ist, das ein darin gelöstes Additiv enthält.

4. Form nach einem der Ansprüche 1 bis 3, bei der das Kunstharzmaterial für die Filterschicht aus der Gruppe ausgewählt ist, die aus einem Epoxidharz, einem Phenolharz, einem Furanharz, einem festen Urethanharz, einem Polyesterharz und einem Acrylharz besteht.

5. Form nach einem der Ansprüche 1 bis 4, bei der das fließfähige Emulsionsmaterial zum Formen der Filterschicht etwa 100 Gewichtsteile einer Mischung einer Epoxidverbindung und einem dafür vorgesehenen Aushärtungsmittel, etwa 1 bis 30 Gewichtsteile nicht-ionischer Emulgatoren, etwa 1 bis 200 Gewichtsteile Wasser und etwa 50 bis 600 Gewichtsteile Füllstoffpartikel umfaßt, wobei zumindest zwei Arten von Emulgatoren vorliegen, die aus der Gruppe ausgewählt sind, die jeweils aus nicht-ionischen Emulgatoren mit HLB-Werten von 4 bis 8, 8 bis 17 bzw. 11 bis 15, 6 bestehen.

6. Form nach einem der Ansprüche 1 bis 5, bei der die Filterschicht in die grobe Oberfläche der groben Zwischenschicht eindringt und mit der Zwischenschicht durchdringbar harzverbunden ist.

7. Verfahren zur Herstellung einer teilbaren Form (1) zum Schlickergießen, die eine Mehrzahl von Formbereichen umfaßt, um, wenn sie zusammengepaßt sind, einen Formhohlraum (4) zu bilden, gekennzeichnet durch Kraftfüllen eines Formraums, der aus einem geteilten luftdichten Gehäuse (2) und eines Modells für eine grobe Zwischenschicht besteht, mit einer Mischung, die im wesentlichen aus einer großen Menge von Zuschlagpartikeln und einem haftfähigen Kunststoffharzmaterial in einer Menge besteht, die ausreicht, die Zuschlagpartikel teilweise zu verbinden, um eine Zwischenschicht (5) grob poröser Struktur zu bilden, die mit dem luftdichten Gehäuse verbunden ist;
Gießfüllen eines Formraums, der aus der resultierenden groben Zwischenschicht (5) und eines Modells für eine Filterschicht besteht, welche die Gestalt eines gewünschten SchlickergießformgegenstandS hat, mit einem fließfähigen Emulsionsmaterial, das etwa 100 Gewichtsteile eines aushärtbaren Kunstharzmaterials, etwa 1 bis 30 Gewichtsteile eines nicht-ionischen Emulgators, etwa 1 bis 200 Gewichtsteile Wasser und etwa 50 bis 600 Gewichtsteile Füllstoffpartikel umfaßt, um eine ausgehärtete Kunstharzfilterschicht (3) zu bilden, die fest mit der Zwischenschicht (5) verbunden ist und eine präzise Form und Abmessung aufgrund keiner nennenswerten Aushärtungsschrumpfung und einer Verbindung mit der Zwischenschicht hat, woraufhin die Harzfilterschicht gleichmäßig mit einem auf Wasser basierenden Lösungsmittel eluiert wird, um eine viskose Substanz auf der Grundlage von Emulgator zu entfernen, die in der ausgehärteten Harzschicht fein dispergiert ist, und zusätzliches Aushärten der Harzschicht, um eine Filterschicht (3) zu bilden, die im wesentlichen frei von den viskosen Substanzen ist und eine im wesentlichen gleichmäßige feine offenzellige Struktur hat, die mit der groben Zwischenschicht (5) durchdringbar verbunden ist.

8. Verfahren nach Anspruch 7, bei dem die Füllstoffpartikel im wesentlichen kugelförmige hydrophile Harzpartikel umfassen.

9. Verfahren nach Anspruch 7 oder 8, bei dem das auf Wasser basierende Lösungsmittel aus warmem Wasser und warmem Wasser ausgewählt ist, das ein darin gelöstes Additiv enthält.

10. Verfahren nach Anspruch 7, 8 oder 9, bei dem das Kunstharzmaterial für die Filterschicht aus der Gruppe ausgewählt ist, die aus einem Epoxidharz, einem Phenolharz, einem Furanharz, einem festen Urethanharz, einem Polyesterharz und einem Acrylharz besteht.

## Revendications

1. Moule pour le coulage de barbotine qui comprend un moule de coulage divisible comprenant une pluralité de parties de moule formant une cavité de moule (4) lorsqu'elles sont assemblées, chaque partie de moule comprenant un boîtier étanche à l'air (2), une couche intermédiaire (5) de structure grossièrement poreuse adjacente au boîtier étanche à l'air, et une couche de filtre (3) en résine synthétique rigide, de structure fine à pores ouverts, adjacente à la couche intermédiaire, un conduit d'amenée de barbotine (8) relié à ladite cavité de moule (4) et communiquant avec l'extérieur du boitier étanche à l'air, un conduit d'écoulement de fluide (9) relié à ladite couche intermédiaire grossière et communiquant avec l'extérieur du boîtier étanche à l'air, ladite couche de filtre (3) étant jointe à la couche intermédiaire grossière (5);
caractérisé en ce que
la couche de filtre (3) est liée de façon perméable par de la résine à et fermement soutenue par la couche intermédiaire grossière (5), en ce que ladite couche de filtre (3) a une dimension et une forme précises du fait qu'elle est moulée à partir d'un matériau d'émulsion résineux contenant un émulsifiant sans retrait de durcissement sensible, en ce que ladite couche de filtre (3) a une structure fine à pores ouverts du fait qu'elle est quasiment exempte de substances solides résiduelles à base d'émulsifiant, et en ce que ledit moule comprenant la couche de filtre (3) aux dimension et forme précises et ayant une structure fine à pores ouverts peut être fabriqué en coulant et moulant sur une couche intermédiaire grossière liée à un boitier étanche à l'air, un matériau d'émulsion pouvant être coulé comprenant en poids environ 100 parties d'un matériau de résine synthétique durcissable, environ 1 à environ 30 parties d'un émulsifiant non ionique, environ 1 à environ 200 parties d'eau, et environ 50 à environ 600 parties de particules de charge, pour obtenir une couche de filtre durcie, et en éluant uniformément la couche de filtre en résine à l'aide d'un solvant à base d'eau pour éliminer quasiment toutes les substances visqueuses à base d'émulsifiant dispersées finement dans la couche de résine durcie, et en poursuivant le durcissement de la couche de résine; ladite couche de filtre (3) pouvant ainsi remplir les fonctions de drainage uniforme de l'eau, de décompression, et d'amenée d'eau et d'air par l'intermédiaire de la couche intermédiaire grossière (5) et du conduit d'écoulement de fluide (9) qui lui est relié.

2. Moule selon la revendication 1, dans lequel les particules de charge comprennent des particules de résine hydrophile de forme sensiblement sphérique.

3. Moule selon la revendication 1 ou 2, dans lequel le solvant à base d'eau est choisi parmi l'eau chaude et l'eau chaude contenant un additif dissous.

4. Moule selon l'une quelconque des revendications 1 à 3, dans lequel le matériau en résine synthétique de la couche de filtre est choisi dans le groupe composé d'une résine époxyde, d'une résine phénolique, d'une résine furannique, d'une résine rigide d'uréthane, d'une résine polyester, et d'une résine acrylique.

5. Moule selon l'une quelconque des revendications 1 à 4, dans lequel le matériau d'émulsion pouvant être coulé servant au moulage de la couche de filtre comprend en poids environ 100 parties d'un mélange d'un composé d'époxyde et d'un composé de durcissement de celui-ci, environ 1 à environ 30 parties d'émulsifiants non ioniques, environ 1 à environ 200 parties d'eau, et environ 50 à environ 600 parties de particules de charge, lesdits émulsifiants étant d'au moins deux sortes choisies dans le groupe composé d'émulsifiants non ioniques ayant des valeurs d'équilibre hydrophile lipophile respectivement comprises entre 4 et 8, 8 et 17, et 11 et 15,6.

6. Moule selon l'une quelconque des revendications 1 à 5, dans lequel la couche de filtre pénètre dans la surface grossière de la couche intermédiaire grossière et est liée de façon perméable par de la résine à la couche intermédiaire.

7. Procédé de fabrication d'un moule divisible (1) pour le coulage de barbotine comprenant une pluralité de parties de moule formant une cavité de moule (4) lorsqu'elles sont assemblées,
caractérisé par le remplissage sous pression d'un volume de moulage formé par un boitier divisible (2) étanche à l'air et par une forme pour une couche intermédiaire grossière, avec un mélange composé essentiellement d'une grande quantité de particules d'agrégat et d'un matériau de résine synthétique adhésive en quantité suffisante pour lier partiellement les particules d'agrégat, pour réaliser une couche intermédiaire (5) de structure grossièrement poreuse liée au boitier étanche à l'air;
le remplissage par coulage d'un volume de moulage formé par la couche intermédiaire grossière (5) ainsi réalisée et par une forme pour une couche de filtre ayant la forme du produit de coulage de barbotine désiré, avec un matériau d'émulsion pouvant être coulé, comprenant en poids environ 100 parties d'un matériau de résine synthétique durcissable, environ 1 à environ 30 parties d'un émulsifiant non ionique, environ 1 à environ 200 parties d'eau, et environ 50 à environ 600 parties de particules de charge, pour former une couche de filtre en résine synthétique (3) durcie liée fermement à la couche intermédiaire (5) et ayant des dimension et forme précises dues à l'absence de retrait de durcissement sensible et à la liaison à la couche intermédiaire; et ensuite par l'élution uniforme de la couche de filtre en résine avec un solvant à base d'eau pour éliminer quasiment toute substance visqueuse à base d'émulsifiant finement dispersée dans la couche de résine durcie et par la poursuite du durcissement de la couche de résine, pour former une couche de filtre (3) quasiment exempte de substances visqueuses et présentant une structure fine à pores ouverts sensiblement uniforme, liée de façon perméable à la couche intermédiaire grossière (5).

8. Procédé selon la revendication 7, dans lequel les particules de charge comprennent des particules de résine hydrophile de forme sensiblement sphérique.

9. Procédé selon la revendication 7 ou 8, dans lequel le solvant à base d'eau est choisi entre l'eau chaude et l'eau chaude contenant un additif dissous.

10. Procédé selon la revendication 7, 8 ou 9, dans lequel le matériau en résine synthétique de la couche de filtre est choisi dans le groupe composé d'une résine époxyde, d'une résine phénolique, d'une résine furannique, d'une résine rigide d'uréthane, d'une résine polyester, et d'une résine acrylique.
